# EUROPÄISCHE PATENTSCHRIFT

(11) **EP 4 335 750 B1**
(45) Veröffentlichungstag und Bekanntmachung des Hinweises auf die Patenterteilung: **11.12.2024**
(21) Anmeldenummer: 23195761.4
(22) Anmeldetag: 06.09.2023
(51) Int. Cl.: B64D 17/74, B64D 17/78

(54) **EINRICHTUNG ZUR VERZÖGERTEN ÖFFNUNG EINES FALLSCHIRMS SOWIE FALLSCHIRMSYSTEM**
DEVICE FOR DELAYING THE OPENING OF A PARACHUTE, AND A PARACHUTE SYSTEM
DISPOSITIF D'OUVERTURE RETARDEE D'UN PARACHUTE ET SYSTEME DE PARACHUTE

(30) Priorität: 09.09.2022 LU 502775
(43) Veröffentlichungstag der Anmeldung: 13.03.2024
(73) Patentinhaber: Paratec Fallschirmbau - Technik - Service Vertrieb GmbH, 66798 Wallerfangen (DE)
(72) Erfinder: ERTLER, Stefan, 57320 Neunkirchen les Bouzonville (FR); KLAUDTKY, Jens, 39104 Magdeburg (DE)
(74) Vertreter: Zeiner, Johannes Michael

(56) Entgegenhaltungen:
- CN-A- 114 162 332
- DE-A1- 10 245 944

## Beschreibung

Die Erfindung betrifft eine Einrichtung zur verzögerten Öffnung eines Fallschirms, insbesondere eines Sprungfallschirms oder eines Lastenfallschirms, einer aus einem Luftfahrzeug Fallschirm springenden Person oder einer aus einem Luftfahrzeug abgesetzten Fracht, wobei die Einrichtung ein Verzögerungsmittel umfasst, das zur Ausbildung einer Verbindung eines lösbar mit dem Luftfahrzeug verbindbaren Hilfsschirms mit einer Fallschirmaufziehleine eingerichtet ist, wobei das Verzögerungsmittel derart ausgebildet ist, dass es aus einer Verzögerungsstellung, in der keine Öffnung des Fallschirms erfolgt, in eine Aufziehstellung, in der der Fallschirm geöffnet wird, bewegbar ist. Ferner betrifft die Erfindung ein Verfahren zum verzögerten Öffnen eines Fallschirms sowie ein Fallschirmsystem.

Durch militärische Benutzung sind als Rundkappenfallschirme ausgebildete Sprungfallschirme bekannt, mit denen Fallschirmspringer durch Seitentüren eines Flugzeugs herausspringen. Nach Sprung aus dem Flugzeug wird der Sprungfallschirm durch eine Aufziehleine, die fest mit dem Flugzeug verbunden ist, aufgezogen, das heißt geöffnet, und der Fallschirmspringer sinkt an dem Sprungfallschirm hängend zu Boden.

Weitere Fallschirme sind aus CN 114 162 332 A und DE 102 45 944 A1 bekannt.

Auf ähnliche Art und Weise kann eine Fracht an einem sogenannten Lastenfallschirm aus einem Luftfahrzeug abgesetzt werden, vorzugsweise durch eine geöffnete Heckklappe des Luftfahrzeugs.

Problematisch ist, dass der Fallschirm bereits unmittelbar nach dem Sprung oder dem Absetzten der Fracht geöffnet wird, so dass der Fallschirmspringer oder die Fracht von einer im Heckbereich des Flugzeugs gebildeten Wirbelschleppe erfasst werden kann.

Besonders gefährlich ist, wenn beidseitig Fallschirmspringer aus dem Flugzeug springen oder Frachtbehälter und deren geöffnete Fallschirme kurz nach deren Öffnung kollidieren. Dies wird als "center-lining" bezeichnet und kann zum Absturz führen.

Dieses Problem ist vermeidbar, wenn der Fallschirm, der als Rundkappenfallschirm ausgebildet sein kann, verzögert geöffnet wird, beispielsweise außerhalb der Wirbelschleppe in einem hinreichend großen Abstand von dem Flugzeug und gegebenenfalls benachbarten Fallschirmspringern oder Frachtbehältern.

Da die Gefährlichkeit einer Wirbelschleppe für öffnende Fallschirme mit zunehmender Absetzgeschwindigkeit, das heißt einer Geschwindigkeit des Luftfahrzeugs beim Herausspringen des Fallschirmspringers oder dem Absetzen einer Fracht, zunimmt, liegt die bisherige Absetzgeschwindigkeit bei maximal 240 km/h.

Moderne Luftfahrzeuge, insbesondere solche für militärische Anwendungen, fliegen deutlich schneller. Absetzgeschwindigkeiten von bis zum 315 km/h sind denkbar. Um einen Schaden oder ein Unfallrisiko für den Fallschirmspringer oder einen Frachtverlust durch Absturz zu verhindern, sollte eine Öffnung des Fallschirms, egal ob Sprungfallschirm oder Lastenfallschirm, außerhalb der Wirbelschleppe und damit verzögert erfolgen.

Der Erfindung liegt die daher Aufgabe zugrunde, eine Einrichtung der eingangs genannten Art zu schaffen, durch die die Sicherheit einer aus einem Luftfahrzeug mit einem Sprungfallschirm abgesetzten Person erheblich verbessert wird.

Ferner liegt der Erfindung die Aufgabe zugrunde, eine Einrichtung der eingangs genannten Art zu schaffen, durch die ein aus einem Luftfahrzeug springender Fallschirmspringer oder ein aus einem Luftfahrzeug abzusetzende Fracht bei einer höheren Absetzgeschwindigkeit absetzbar ist.

Erfindungsgemäß wird die Aufgabe dadurch gelöst, dass das Verzögerungsmittel ein Mittel zur Führung des Verzögerungsstrangs umfasst, das zur Umlenkung eines Verzögerungsstrangs eingerichtet ist, wobei das Verzögerungsmittel strangförmig ausgebildet ist und einen Verbindungshauptstrang sowie den Verzögerungsstrang umfasst, wobei ein Abstand von Enden des Verzögerungsmittels in der Verzögerungsstellung kleiner ist als in der Aufziehstellung, Enden des Verzögerungsstrangs an einem gleichen Ende des Verbindungshauptstrangs unmittelbar mit dem Verbindungshauptstrang verbunden sind, und das Mittel zur Führung des Verzögerungsstrangs mit dem Verbindungshauptstrang verbunden ist.

Bei Sprung eines Fallschirmspringers aus dem Luftfahrzeug oder Absetzen einer Fracht aus dem Luftfahrzeug wird durch eine Hilfsschirmaufziehleine, die mit dem Luftfahrzeug verbunden ist, ein Hilfsschirm geöffnet. Durch den geöffneten Hilfsschirm wirkt auf das Verzögerungsmittel eine Kraft, durch die es während eines freien Falls des Fallschirmspringers oder der Fracht aus der Verzögerungsstellung in die Aufziehstellung bewegt wird. Ist die Aufziehstellung erreicht, wirkt der Hilfsschirm über das Verzögerungsmittel unmittelbar auf eine Fallschirmaufziehleine und öffnet den Fallschirm. Eine Verzögerung der Öffnung des Fallschirms, das heißt diejenige Zeit, die für die Bewegung aus der Verzögerungsstellung in die Aufziehstellung erforderlich ist, kann durch geeignete Auslegung des Verzögerungsmittels zwischen 0,5 Sekunden und 2 Sekunden betragen.

Ausgehend von einer Luftfahrzeuggeschwindigkeit von inetwa 250 km/h kann der Fallschirmspringer oder die Fracht bei der verzögerten Öffnung des Fallschirms jeweils horizontal und vertikal inetwa 100 bis 200 Meter von dem Luftfahrzeug entfernt und damit weit außerhalb einer Wirbelschleppe oder hinreichend weit von einem benachbarten Fallschirmspringer oder einer abgesetzten Fracht entfernt sein.

Durch eine Umlenkung des Verzögerungsstrangs, beispielsweise durch zumindest zwei oder drei Führungselemente des Führungsmittels, kann eine Zeit, die für die Bewegung aus der Verzögerungsstellung in die Aufziehstellung erforderlich ist, nicht nur eingestellt werden, sondern das Verzögerungsmittel kann besonders kompakt ausgebildet sein. Je mehr Umlenkungen vorgesehen sind, desto länger ist diese Zeit.

Vorzugsweise ist das Führungsmittel derart ausgebildet, dass der Verzögerungsstrang um 180 Grad umgelenkt wird.

Es versteht sich, dass Verzögerungsstrangabschnitte im Bereich des Führungsmittels aneinander anliegen können. Vorteilhaft ist eine Einstellung der Zeit, die für die Bewegung aus der Verzögerungsstellung in die Aufziehstellung erforderlich ist, mit wenigen Umlenkungen möglich.

Der Verzögerungsstrang ist derjenige Teil der erfindungsgemäßen Einrichtung, der eine verzögerte Öffnung des Fallschirms ermöglicht. Der Verbindungshauptstrang und der Verzögerungsstrang können als Gurt oder Seil ausgebildet sein, vorzugsweise als Gurt.

Denkbar ist, dass der Verzögerungsstrang als Rückstellmittel ausgebildet ist, beispielsweise in der Art eines Bungeeseils.

Insbesondere kann das strangförmige Verzögerungsmittel derart ausgebildet sein, dass der Verbindungshauptstrang bei einer Bewegung aus der Verzögerungsstellung in die Aufziehstellung in einer Verbindungshauptstranglängsrichtung spannungsfrei ist. Das heißt, dass eine auf das strangförmige Verzögerungsmittel wirkende Kraft bei der Bewegung aus der Verzögerungsstellung in die Aufziehstellung auf den Verzögerungsstrang wirkt, jedoch nicht oder lediglich unwesentlich auf den Verbindungshauptstrang. Dazu kann ein einem Fallschirm zugewandtes Ende des strangförmigen Verzögerungsmittels mit einer Fallschirmaufziehleine und einer sogenannten äußeren Verpackung des Fallschirms derart verbunden sein, dass bei einer Bewegung aus der Verzögerungsstellung in die Aufziehstellung keine Kraft auf eine Fallschirmaufziehleine wirkt. Mit Erreichen der Aufziehstellung wird die Verbindung mit der äußeren Verpackung, die als lösbare Verbindung ausgebildet ist, gelöst, so dass das Verzögerungsmittel unmittelbar auf die Fallschirmaufziehleine einwirken kann und der Fallschirm geöffnet wird. Eine solche lösbare Verbindung kann beispielsweise als sogenannte Dreiringverbindung ausgebildet sein.

Ein Verbindungshauptstrang kann beispielsweise in der Verzögerungsstellung derart zusammengelegt sein, dass Enden des Verbindungshauptstrangs in einer Verbindungshauptstranglängsrichtung unmittelbar nebeneinander oder übereinander angeordnet sind. Vorteilhaft wird eine rein mechanische Einrichtung zur verzögerten Öffnung eines Fallschirms geschaffen. Weiter vorteilhaft ist diese besonders widerstandsfähig und bei jeder Witterung nutzbar und lagerbar.

Die Enden sind vorzugsweise an einer einzigen Stelle unmittelbar mit dem Verbindungshauptstrang verbunden, beispielsweise vernäht. Fehlstellen, die an denen Materialversagen auftraten kann, werden vorteilhaft minimiert, wodurch eine Qualitätsprüfung vereinfacht wird. Insbesondere kann ein Führungselement eines Führungsmittels zur Führung des Verzögerungsstrangs an einem dem ersten Ende abgewandten zweiten Ende des Verbindungshauptstrangs angeordnet und mit diesem verbunden sein. Das Führungselement kann beispielsweise zur Umlenkung des Verzögerungsstrangs eingerichtet sein, insbesondere zu dessen Umlenkung um 180 Grad. Die Verwendung mehrerer Führungselemente ist denkbar. In diesem Fall ist das erste Ende des Verbindungshauptstrangs dasjenige Ende, an dem die Enden des Verzögerungsstrangs unmittelbar mit dem Verbindungshauptstrang verbunden sind.

Ferner liegt der Erfindung die Aufgabe zugrunde, ein Fallschirmsystem, insbesondere ein Sprungfallschirmsystem oder ein Lastenfallschirmsystem zu schaffen, durch das ein Absturzrisiko erheblich reduziert wird, und das beispielsweise für militärische Zwecke verwendbar ist.

Diese Aufgabe wird erfindungsgemäß dadurch gelöst, dass das Fallschirmsystem eine Einrichtung zur verzögerten Öffnung aufweist.

Es versteht sich, dass ein bestehendes Fallschirmsystem, insbesondere ein Sprungfallschirmsystem oder ein Lastenfallschirmsystem wie es beispielsweise für militärische Zwecke benutzt wird, durch die erfindungsgemäße Einrichtung zur verzögerten Öffnung eines Fallschirms nachgerüstet und wieder zurückgerüstet werden kann. Die erfindungsgemäße Verzögerungseinrichtung ist vorteilhaft nachrüstbar und mit einem bestehenden Fallschirmsystem nutzbar, das heißt zur Ergänzung eines bestehenden Fallschirmsystems vorgesehen.

In einer Ausgestaltung der Erfindung ist der Verzögerungsstrang durch das Mittel zur Führung des Verzögerungsstrangs reibschlüssig geführt. Durch das Führungsmittel wird der Verzögerungsstrang derart reibschlüssig geführt, dass eine für eine Bewegung aus der Verzögerungsstellung in die Aufziehstellung erforderliche Zeit einstellbar ist.

Das Führungsmittel kann zumindest ein, vorzugsweise zwei Führungselemente aufweisen, die in einer Verbindungshauptstranglängsrichtung zueinander versetzt angeordnet und mit dem Verbindungshauptstrang verbunden sind. Vorzugsweise ist das zumindest eine Führungselement ringförmig ausgebildet und besteht aus einem Metall wie Stahl.

Sind zumindest zwei insbesondere ringförmige Führungselemente vorgesehen, können diesen in Verbindungshauptstranglängsrichtung paarweise überlappend hintereinander angeordnet sein. Vorteilhaft kann durch Hindurchführen des Verzögerungsstrangs durch diese Führungselemente eine Zeit, die für die Bewegung aus der Verzögerungsstellung in die Aufziehstellung für verschiedene Anwendungsfälle maßgeschneidert werden. Dazu kann eine zwischen den Führungselementen und dem Verzögerungsstrang wirkende Reibungskraft so eingestellt werden, dass die Zeit für die Bewegung aus der Verzögerungsstellung in die Aufziehstellung einstellbar ist. Sind Kontaktflächen beispielsweise rauh, ist die Zeit größer als bei glatten Kontaktflächen.

Denkbar ist, dass Verzögerungsstrangabschnitte beim reibschlüssigen Führen des Verzögerungsstrangs durch das Führungsmittel aneinander anliegen. Vorteilhaft besteht eine weitere Möglichkeit zur Einstellung einer Zeit für die Bewegung aus der Verzögerungsstellung in die Aufziehstellung.

Zweckmäßigerweise verläuft der Verzögerungsstrang in der Verzögerungsstellung und in der Aufziehstellung mäanderförmig. Der Verzögerungsstrang weist in der Aufziehstellung weniger Windungen als in der Verzögerungsstellung auf. Vorteilhaft wird eine besonders kompakte, rein mechanische Einrichtung zur verzögerten Öffnung des Fallschirms ausgebildet. Insbesondere weist der Verzögerungsstrang in der Verzögerungsstellung eine einzige Windung aufweist.

In einer weiteren Ausgestaltung der Erfindung sind Enden des Verzögerungsstrangs und der Verbindungshauptstrang unter Bildung eines Stoßes miteinander verbunden. Sind der Verbindungshauptstrang und der Verzögerungsstrang als Gurte, beispielsweise Kunststoffgurte ausgebildet, können die Enden des Verzögerungsstrangs und der Verbindungshauptstrang einen Stoß bilden und miteinander vernäht sein. Vorteilhaft wird eine besonders auf Zug belastbare Verbindung geschaffen.

In einer Ausgestaltung der Erfindung weist die Einrichtung an gegenüberliegenden Enden jeweils einen Stoß auf, der von übereinander angeordneten und miteinander verbundenen Strangenden gebildet ist, wobei Enden des Verzögerungsstrangs und ein Ende des Verbindungshauptstrangs unter Bildung eines ersten Stoßes miteinander verbunden sind, und ein zweiter Stoß von einem Ende des Verbindungshauptstrangs mit Enden eines eine Schlaufe bildenden Gurtabschnitts sowie Enden eines Haltegurts gebildet ist. Vorteilhaft ist eine einfache Herstellung bei hervorragender Zugfestigkeit möglich.

Ein Abstand der beiden Stöße ist in der Verzögerungsstellung kleiner als in der Aufziehstellung.

Zweckmäßigerweise weist das Verzögerungsmittel ein Halteelement auf, das bei bestimmungsgemäßer Verwendung der Einrichtung an einem einem Fallschirm zugewandten Ende des Verbindungshauptstrangs angeordnet ist, wobei das Halteelement mit einem Gegenhalteelement und mit einer Fallschirmaufziehleine verbindbar ist, wobei eine Verbindung mit dem Gegenhalteelement als lösbare Verbindung ausgebildet ist.

Das Gegenhalteelement ist vorzugsweise an der sogenannten äußeren Verpackung des Fallschirms angeordnet. Die äußere Verpackung ist derjenige Teil eines Fallschirmsystems, der mit einem Gurtzeug, in dem sich ein Fallschirmspringer oder eine Fracht befindet, verbunden ist.

Durch die lösbare Verbindung des Halteelements mit dem Gegenhalteelement wird sichergestellt, dass bei einer Bewegung des Verzögerungsmittel aus der Verzögerungsstellung in die Aufziehstellung keine Kraft auf die Fallschirmaufziehleine wirkt, die ein vorzeitiges Aufziehen des Fallschirms bewirken könnte. Mit Erreichen der Aufziehstellung wird die lösbare Verbindung des Halteelements mit dem Gegenhalteelement gelöst und der Verbindungshauptstrang wirkt auf die Fallschirmaufziehleine, die den Fallschirm öffnet.

Die lösbare Verbindung des Halteelements mit dem Gegenhalteelement kann beispielsweise als dem mit Fallschirmsprung befassten Fachmann bekanntes Dreiringsystem ausgebildet sein, bei dem ein Dreiringverbindungsstrang durch eine oder mehrere Halteösen, die die Ringe in einer Verbindungsstellung halten, geführt ist. Wird der Dreiringverbindungsstrang, der mehrsträngig ausgebildet sein kann, aus der oder den Halteösen herausgezogen, wird die lösbare Verbindung gelöst. Durch das Dreiringsystem ist vorteilhaft eine Trennung einer stark zugbelasteten Verbindung auf zuverlässige Art und Weise und mit geringem Kraftaufwand möglich. Außerdem ist eine Dreiringverbindung besonders einfach und auslösesicher herstellbar.

Es versteht sich, dass die lösbare Verbindung als Zweiring-, Vierring- oder Fünfringverbindung ausgebildet sein kann.

Ein erfindungsgemäße Verfahren zur verzögerten Öffnung eines Fallschirms, insbesondere eines Sprungfallschirms oder eines Lastenfallschirms, bei dem ein Hilfsschirm bei einem Sprung der Person oder einem Absetzen einer Fracht aus dem Luftfahrzeug geöffnet wird, und der Hilfsschirm derart auf ein Verzögerungsmittel, das den Hilfsschirm mit einer Fallschirmaufziehleine verbindet, wirkt, dass das Verzögerungsmittel aus einer Verzögerungsstellung in eine Aufziehstellung, in der der Fallschirm geöffnet wird, bewegt wird, wobei ein Verzögerungsstrang durch ein Führungsmittel des Verzögerungsmittels umgelenkt wird, wobei das Verzögerungsmittel strangförmig ausgebildet ist, und einen Verbindungshauptstrang sowie den Verzögerungsstrang umfasst, wobei ein Abstand von Enden eines Verbindungshauptstrangs des Verzögerungsmittels bei einer Bewegung aus der Verzögerungsstellung in die Aufziehstellung vergrößert wird, und der Fallschirm in der Aufziehstellung geöffnet wird, wobei Enden des Verzögerungsstrangs an einem gleichen Ende des Verbindungshauptstrangs unmittelbar mit dem Verbindungshauptstrang verbunden sind, und das Mittel zur Führung des Verzögerungsstrangs mit dem Verbindungshauptstrang verbunden ist.

Vorteilhaft wird ein rein mechanisches Verfahren zur verzögerten Öffnung ausgebildet.

Ein erfindungsgemäßes Fallschirmsystem, insbesondere ein Sprungfallschirmsystem oder Lastenfallschirmsystem umfasst eine erfindungsgemäße Einrichtung zur verzögerten Öffnung eines Fallschirms.

Vorteilhaft wird ein flexibel und vielseitig einsetzbares Fallschirmsystem geschaffen.

Bei einem erfindungsgemäßen Fallschirmsystem, insbesondere einem Sprungfallschirmsystem oder einem Lastenfallschirmsystem, umfasst zweckmäßigerweise ein mit einem Luftfahrzeug lösbar verbindbarer Hilfsschirm des Fallschirmsystems eine Hilfsschirmverpackungshülle, die mit dem Hilfsschirm verbunden und lösbar mit einer Hilfsschirmaufziehleine verbindbar ist, wobei die Hilfsschirmaufziehleine zur Verbindung des Hilfsschirms mit dem Luftfahrzeug eingerichtet ist.

Nach Absprung eines das Fallschirmsystem benutzenden, aus einem Luftfahrzeug Fallschirm springenden Fallschirmspringers oder einer aus dem Luftfahrzeug abgesetzten Fracht verbleibt im Gegensatz zu aus dem Stand der Technik bekannten Systemen lediglich die Hilfsschirmaufziehleine an dem Luftfahrzeug. Vorteilhaft kann das Fallschirmsystem unmittelbar nach einer Landung des Fallschirmspringers oder des Frachtbehälters erneut gepackt werden.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: Ein erfindungsgemäßes Fallschirmsystem,
- Fig. 2: Details eines erfindungsgemäßen Verzögerungsmittels in mehreren Ansichten in einer Verzögerungsstellung und einer Aufziehstellung.

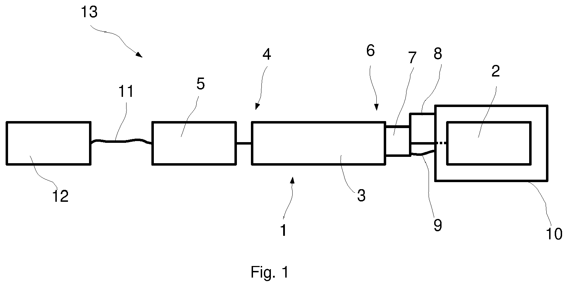

Eine in Fig. 1 schematisch gezeigte Einrichtung 1 zur verzögerten Öffnung eines Sprungfallschirms 2 umfasst ein strangförmiges Verzögerungsmittel 3, das an einem ersten Ende 4 mit einem Hilfsschirm 5 und an einem zweiten Ende 6 durch ein Halteelement 7 mit einem Gegenhalteelement 8 und einer Sprungfallschirmaufziehleine 9 des Sprungfallschirms 2 verbunden ist. Das Gegenhalteelement 8 ist durch eine Dreiringverbindung lösbar mit dem Halteelement 7 verbunden und an eine äußere Verpackung 10 des Sprungfallschirms 2 angebracht. Der Hilfsschirm 5 ist durch eine Hilfsschirmaufziehleine 11 derart lösbar mit einem Luftfahrzeug 12 verbunden, dass bei einem Öffnen des Hilfsschirms 5 lediglich die Hilfsschirmaufziehleine 11 am Luftfahrzeug 12 verbleibt. Eine in Fig. 1 nicht gezeigte Hilfsschirmverpackungshülle ist mit dem Hilfsschirm 5 verbunden.

Ein erfindungsgemäßes Sprungfallschirmsystem 13 umfasst zumindest diejenigen Bestandteile, die in diesem Ausführungsbeispiel mit den Bezugszeichen 1 bis 3, 5, 7 bis 9 und 10 versehen sind.

Springt ein Fallschirmspringer aus dem Luftfahrzeug 12, wird durch die die Hilfsschirmaufziehleine 11 der Hilfsschirm 5 geöffnet, wodurch auf das Verzögerungsmittel 3, das durch das Halteelement 7 mit dem Gegenhalteelement 8 lösbar verbunden ist, eine Kraft wirkt, durch die das Verzögerungsmittel 3 aus einer Verzögerungsstellung in eine Aufziehstellung bewegt wird. In der Aufziehstellung wird die Verbindung des Gegenhalteelements 8 mit dem Halteelement 7 gelöst, so dass die von dem Hilfsschirm 5 auf das Verzögerungsmittel 3 wirkende Kraft unmittelbar auf die Sprungfallschirmaufziehleine 9 wirkt und der Sprungfallschirm 2 aufgezogen, das heißt geöffnet, wird. Es erfolgt eine verzögerte Öffnung des Sprungfallschirms 2.

Während der Bewegung des Verzögerungsmittels 3 aus der Verzögerungsstellung in die Aufziehstellung entfernt sich der Fallschirmspringer in vertikaler und horizontaler Richtung weit genug von dem Luftfahrzeug 12, so dass eine Öffnung des Sprungfallschirms 2 außerhalb einer Wirbelschleppe des Luftfahrzeugs 12 und hinreichend weit entfernt von einem anderen Fallschirmspringer erfolgt.

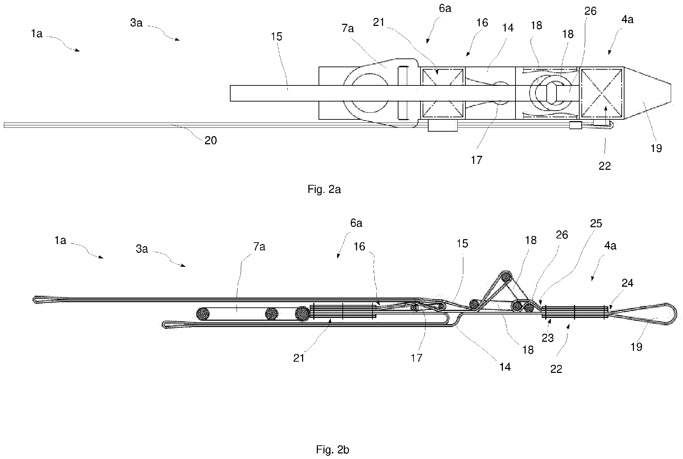

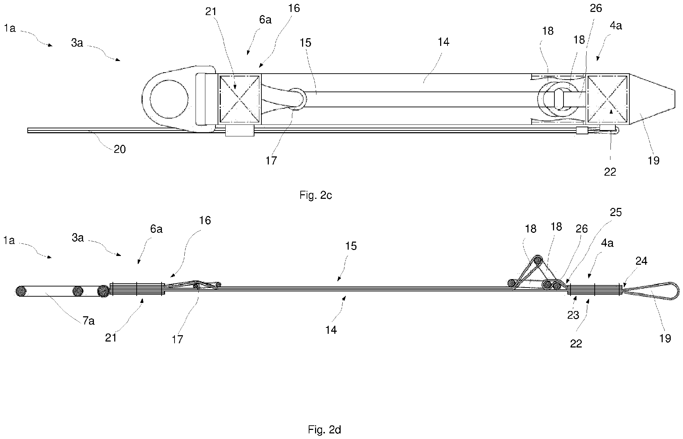

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Ein in Fig. 2a in Draufsicht und in Fig. 2b in einer geschnittenen Seitenansicht gezeigte Einrichtung 1a zur verzögerten Öffnung eines Sprungfallschirms in einer Verzögerungsstellung umfasst ein strangförmiges Verzögerungsmittel 3a, das einen Verbindungshauptstrang 14 sowie einen Verzögerungsstrang 15 aufweist, wobei Enden 16 des Verzögerungsstrangs 15 an einem zweiten Ende 6a des Verzögerungsmittels 3a unmittelbar mit dem Verbindungshauptstrang 14 verbunden sind. Zur Verbesserung einer Stabilität der Verbindung der Strangenden 16 mit dem Verbindungshauptstrang 14 können diese unter Bildung eines Stoßes miteinander sowie mit dem Verbindungshauptstrang 14 verbunden werden, insbesondere vernäht werden.

Der Verbindungshauptstrang 14 ist in der Verzögerungsstellung in diesem Ausführungsbeispiel mäanderförmig mit einer einzigen Windung ausgebildet.

Der Verzögerungsstrang 15 ist durch mehrere Metallführungsringe 17, 18 hindurchgeführt, wobei die beiden Metallführungsringe 18 an einem ersten Ende 4a des Verzögerungsmittels 3a mit diesem verbunden und in einer Verbindungshauptstranglängsrichtung überlappend hintereinander angeordnet sind. Der Verzögerungsstrang 15 wird durch die Metallführungsringe 18 reibschlüssig geführt, wobei in Fig. 2, insbesondere Fig. 2b und Fig. 2d, nicht mit einem Bezugszeichen versehene Verzögerungsstrangsabschnitte im Bereich der beidem Metallführungsringe 18 aneinander anliegen.

Der Verzögerungsstrang 15 ist in der gezeigten Verzögerungsstellung mäanderförmig mit mehreren Windungen ausgebildet. Dies zeigt Fig. 2b in Detail.

An dem ersten Ende 4a des strangförmigen Verzögerungsmittels 3a befindet sich außerdem eine Schlaufe 19, die zur Verbindung mit einer in Fig. 2 nicht gezeigten und in Fig. 1 mit 11 bezeichneten Hilfsschirmaufziehleine eines Hilfsschirms eingerichtet ist.

An dem zweiten Ende 6a des strangförmigen Verzögerungsmittels 3a ist ein Halteelement 7a angebracht, das zur Ausbildung einer lösbaren Verbindung mit einem in Fig. 1 mit 8 bezeichneten Gegenhalteelement eingerichtet ist.

Seitlich ist an das Verzögerungsmittel 3a ein doppelsträngiges Sicherungskabel 20 angebracht, das zur Sicherung einer lösbaren, in Fig. 2 nicht im Detail gezeigten Verbindung des Halteelements 7a mit einem in Fig. 1 gezeigten Gegenhalteelement 8 einer sogenannten Dreiringverbindung vorgesehen ist.

Das Verzögerungsmittel 3a ist in Fig. 2c und 2d in der Aufziehstellung gezeigt, davon in Fig. 2c in Draufsicht und in Fig. 2d in geschnittener Seitenansicht.

In der Aufziehstellung sind die Enden 4a, 6a, des Verzögerungsmittels 3a in Verbindungshauptstranglängsrichtung weiter voneinander entfernt als in der Verzögerungsstellung.

Der Verbindungshauptstrang 14a ist außerdem nicht mehr mäanderförmig zusammengelegt, sondern verläuft gerade. In der Aufziehstellung wirkt eine zum Öffnen eines Sprungfallschirms erforderliche, von dem geöffneten Hilfsschirm aufgebrachte Kraft unmittelbar durch den Verbindungshauptstrang 14a auf eine in Fig. 2 nicht gezeigte Sprungfallschirmaufziehleine und öffnet einen Sprungfallschirm.

Der Verzögerungsstrang 15a ist weiterhin mäanderförmig zusammengelegt, weist jedoch nur noch eine Windung auf, das heißt er wird wie in Fig. 2d gezeigt einmal durch die beiden Metallführungsringe 18 hindurchgeführt.

Die Enden 16 des Verzögerungsstrangs 15 und das Ende 6a des Verbindungshauptstrangs 14 sind unter Bildung eines Stoßes 21 miteinander verbunden, vorzugsweise vernäht.

Ein weiterer Stoß 22 wird von einem Ende 23 des Verbindungshauptstrangs 14 mit Enden 24 eines die Schlaufe 19 bildenden Gurtabschnitts sowie Enden 25 eines Haltegurts 26 gebildet. Der Haltegurt 26 verbindet die Metallführungsringe 18 mit der Einrichtung 3a. Zur Bildung des weiteren Stoßes 22 sind die Enden 22, 24, 25 miteinander verbunden, vorzugsweise vernäht.

Es versteht sich, dass eine erfindungsgemäße Einrichtung zur verzögerten Öffnung eines Fallschirms auch zur Verwendung mit einem Lastenfallschirm geeignet ist.

Ein erfindungsgemäßes Fallschirmsystem kann außerdem als Lastenfallschirmsystem ausgebildet sein.

## Patentansprüche

1. Einrichtung (1; 1a) zur verzögerten Öffnung eines Fallschirms (2), insbesondere eines Sprungfallschirms oder eines Lastenfallschirms, einer aus einem Luftfahrzeug (12) Fallschirm springenden Person oder einer aus einem Luftfahrzeug (12) abgesetzten Fracht, wobei die Einrichtung (1; 1a) ein Verzögerungsmittel (3; 3a) umfasst, das zur Ausbildung einer Verbindung eines lösbar mit dem Luftfahrzeug (12) verbindbaren Hilfsschirms (5) mit einer Fallschirmaufziehleine (9) eingerichtet ist, wobei das Verzögerungsmittel (3; 3a) derart ausgebildet ist, dass es aus einer Verzögerungsstellung, in der keine Öffnung des Fallschirms (2) erfolgt, in eine Aufziehstellung, in der der Fallschirm geöffnet wird, bewegbar ist, wobei das Verzögerungsmittel (3; 3a) strangförmig ausgebildet ist und einen Verbindungshauptstrang (14) sowie einen Verzögerungsstrang (15) umfasst, wobei ein Abstand von Enden (4, 6; 4a, 6a) des Verzögerungsmittels (3; 3a) in der Verzögerungsstellung kleiner ist als in der Aufziehstellung, wobei das Verzögerungsmittel (3; 3a) ein Mittel (18) zur Führung des Verzögerungsstrangs umfasst, das zur Umlenkung des Verzögerungsstrangs (15) eingerichtet ist, wobei das Mittel (18) zur Führung des Verzögerungsstrangs (15) mit dem Verbindungshauptstrang (14) verbunden ist,
**dadurch gekennzeichnet, dass** Enden (16) des Verzögerungsstrangs (15) an einem gleichen Ende (6; 6a) des Verbindungshauptstrangs (14) unmittelbar mit dem Verbindungshauptstrang (14) verbunden sind.

2. Einrichtung nach Anspruch 1,
**dadurch gekennzeichnet,**
**dass** der Verzögerungsstrang (15) durch das Mittel (18) zur Führung des Verzögerungsstrangs (15) reibschlüssig geführt ist.

3. Einrichtung nach Anspruch 1 oder 2,
**dadurch gekennzeichnet,**
**dass** der Verzögerungsstrang (15) in der Verzögerungsstellung und in der Aufziehstellung mäanderförmig verläuft.

4. Einrichtung nach einem der Ansprüche 1 bis 3,
**dadurch gekennzeichnet,**
**dass** Enden (16) des Verzögerungsstrangs (15) und der Verbindungshauptstrang (14) unter Bildung eines Stoßes (21) miteinander verbunden sind.

5. Einrichtung nach einem der Ansprüche 1 bis 4,
**dadurch gekennzeichnet,**
**dass** die Einrichtung (1; 1a) an gegenüberliegenden Enden (4, 6; 4a, 6a) jeweils einen Stoß (21, 22) aufweist, der von übereinander angeordneten und miteinander verbundenen Strangenden (16, 23, 24, 25) gebildet ist, wobei Enden (16) des Verzögerungsstrangs (15) und ein Ende (6a) des Verbindungshauptstrangs (14) unter Bildung eines ersten Stoßes (21) miteinander verbunden sind, und ein zweiter Stoß (22) von einem Ende (23) des Verbindungshauptstrangs (14) mit Enden (24 ) eines eine Schlaufe (19) bildenden Gurtabschnitts sowie Enden (25) eines Haltegurts (26) gebildet ist.

6. Einrichtung nach einem der Ansprüche 1 bis 5,
**dadurch gekennzeichnet,**
**dass** das Verzögerungsmittel (3; 3a) ein Halteelement (7; 7a) aufweist, das bei bestimmungsgemäßer Verwendung der Einrichtung (1) an einem einem Fallschirm (2) zugewandten Ende (6; 6a) des Verbindungshauptstrangs (14) angeordnet ist, wobei das Halteelement (7; 7a) mit einem Gegenhalteelement (8) und mit einer Fallschirmaufziehleine (9) verbindbar ist, wobei eine Verbindung mit dem Gegenhalteelement (8) als lösbare Verbindung ausgebildet ist.

7. Verfahren zur verzögerten Öffnung eines Fallschirms (2), insbesondere eines Sprungfallschirms oder eines Lastenfallschirms, einer aus einem Luftfahrzeug (12) Fallschirm springenden Person oder einer aus einem Luftfahrzeug (12) abgesetzten Fracht, bei dem ein Hilfsschirm (5) bei einem Sprung der Person aus dem Luftfahr zeug (12) oder einem Absetzen der Fracht geöffnet wird, und der Hilfsschirm (5) derart auf ein Verzögerungsmittel (3; 3a), das den Hilfsschirm (5) mit einer Fallschirmaufziehleine (9) verbindet, wirkt, dass das Verzögerungsmittel (3; 3a) aus einer Verzögerungsstellung, in der keine Öffnung des Fallschirms (2) erfolgt, in eine Aufziehstellung, in der der Fallschirm (2) geöffnet wird, bewegt wird, wobei das Verzögerungsmittel (3; 3a) strangförmig ausgebildet ist, und einen Verbindungshauptstrang (14) sowie einen Verzögerungsstrang (15) umfasst, wobei ein Abstand von Enden (4, 6; 4a, 6a) eines Verbindungshauptstrangs (14) des Verzögerungsmittels (3; 3a) bei einer Bewegung aus der Verzögerungsstellung in die Aufziehstellung vergrößert wird, und der Fallschirm (2) in der Aufziehstellung geöffnet wird, wobei der Verzögerungsstrang durch ein Führungsmittel (1) des Verzögerungsmittels (3; 3a) umgelenkt wird, wobei Enden (16) des Verzögerungsstrangs (15) an einem gleichen Ende (6; 6a) des Verbindungshauptstrangs (14) unmittelbar mit dem Verbindungshauptstrang (14) verbunden sind, und das Mittel (18) zur Führung des Verzögerungsstrangs (15) mit dem Verbindungshauptstrang (14) verbunden ist.

8. Fallschirmsystem (13), insbesondere Sprungfallschirmsystem oder Lastenfallschirmsystem, das eine Einrichtung (1) zur verzögerten Öffnung eines Fallschirms (2) nach einem der Ansprüche 1 bis 6 umfasst.

9. Fallschirmsystem nach Anspruch 8,
**dadurch gekennzeichnet,**
**dass** ein mit einem Luftfahrzeug (12) lösbar verbindbarer Hilfsschirm (5) des Fallschirmsystems eine Hilfsschirmverpackungshülle umfasst, die mit dem Hilfsschirm (5) verbunden und lösbar mit einer Hilfsschirmaufziehleine (11) verbindbar ist, wobei die Hilfsschirmaufziehleine (11) zur Verbindung des Hilfsschirms (5) mit dem Luftfahrzeug (12) eingerichtet ist.

## Claims

1. Device (1) for delaying the opening of a parachute (2), in particular a personel parachute or a cargo parachute, of a person exiting an aircraft (12) or of a cargo dropped from an aircraft (12), wherein the device comprises a delaying means (3; 3a) designed to provide a connection between a drogue parachute (5) connectable with a detachable connection to the aircraft (12) and a parachute bridal line (9), wherein the delaying means (3; 3a) is designed such that it is movable from a delaying position, in which no deployment of the parachute (2) takes place, to a deployment position, in which the parachute is deployed, wherein the delaying means (3; 3a) is of straped construction and comprises a connecting main strap (14) and a delaying strap (15), wherein a distance between ends (4, 6; 4a, 6a) of the delaying means (3; 3a) in the delaying position is smaller than in the deployment position, wherein the delaying means (3; 3a) comprises a guiding means (18) which is designed to deflect the delaying strap (15), wherein the guiding means (18) for guiding the delaying strap (15) is connected to the connecting main strap (14),
**characterized in that**
ends (16) of the delaying strap (15) are directly connected to the connecting main strap (14) at a same end (6; 6a) of the connecting main strap (14).

2. The device according to claim 1,
**characterized in that**
the delaying strap (15) is frictionally guided by the means (18) for guiding the delaying strap (15).

3. The device according to claim 1 or 2,
**characterized in that**
the delaying strap (15) extends in a circuitous manner both in the delaying position and in the deployment position.

4. The device according to one of claims 1 to 3,
**characterized in that**
ends (16) of the delaying strap (15) and the connecting main strap (14) are connected to one another forming a stack (21).

5. The device according to one of claims 1 to 4,
**characterized in that**
the device (1; 1a) has a stack (21, 22) at opposite ends (4, 6; 4a, 6a), which stack is formed from strand ends (16, 23, 24, 25) being arranged one above the other and connected to one another, wherein ends (16) of the delaying strap (15) and an end (6a) of the connecting main strap (14) are connected to one another forming a first stack (21), an a second stack (22) is formed from an end (23) of the connecting main strap (14) with ends (24) of a strap section forming a loop (19) and ends (25) of a holding strap (26).

6. The device according to one of claims 1 to 5,
**characterized in that**
the delaying means (3; 3a) comprises a retaining member (7; 7a) which is, when the device (1) is used as intended, arranged at an end (6; 6a) of the connecting main strap (14) facing the parachute (2), the retaining member (7; 7a) being connectable to a counter-retaining member (8) and to a parachute bridal line (9), a connection to the counter-retaining member (8) being provided as a detachable connection.

7. Method for delaying the opening of a parachute (2), in particular a personel parachute or a cargo parachute, of a person person exiting an aircraft (12) or of a cargo dropped from an aircraft (12), wherein a drogue parachute (5) is released when the person exits the aircraft (12) or when the cargo is dropped, and the drogue parachute (5) acts on a delaying means (3; 3a) connecting the drogue parachute (5) to a parachute bridal line (9) in such a way that the delaying means (3; 3a) is moved from a delaying position, in which the parachute (2) is not deployed, to a deployment position, in which the parachute (2) is deployed, wherein the delaying means (3; 3a) is of straped construction and comprises a connecting main strap (14) and a delaying strap (15), wherein a distance between ends (4, 6; 4a, 6a) of a connecting main strap (14) of the delaying means (3; 3a) is increased during a movement from the delaying position into the deployment position, and the parachute (2) is opened in the deployment position, wherein the delaying strap is deflected by a guiding means (1) of the delaying means (3; 3a), wherein ends (16) of the delaying strap (15) are directly connected to the connecting main strap (14) at a same end (6; 6a) of the connecting main strap (14), and the means (18) for guiding the delaying strap (15) is connected to the connecting main strap (14).

8. Parachute system (13), in particular personel parachute system or cargo parachute system comprising a device (1) for delaying the opening of a parachute (2) according to one of claims 1 to 6.

9. Parachute system according to claim 8,
**characterized in that**
a drogue parachute (5) connectable with a detachable connection to an aircraft (12) comprises a drogue parachute packaging sleeve connected to the drogue parachute (5) and connectable with a detachable connection to a drogue parachute static line (11), wherein the drogue parachute static line (11) is designed to connect the drogue parachute (5) to the aircraft (12).

## Revendications

1. Dispositif (1) pour retarder l'ouverture d'un parachute (2), en particulier d'un parachute personnel où d'un parachute de fret, d'une personne sortant d'un aéronef (12) ou d'un fret largué d'un aéronef (12), dans lequel le dispositif comprend un moyen de retardement (3 ; 3a) conçu pour assurer une connexion entre un parachute de freinage (5) pouvant être relié à l'aéronef (12) par une connexion détachable et une ligne de pontage de parachute (9), dans lequel le moyen de retardement (3 ; 3a) est conçu de manière à pouvoir être déplacé d'une position de retardement, dans laquelle aucun déploiement du parachute (2) n'a lieu, à une position de déploiement, dans laquelle le parachute est déployé, dans lequel le moyen de retardement (3 ; 3a) est constitué de sangles et comprend une sangle principale de liaison (14) et une sangle de retardement (15), dans lequel une distance entre les extrémités (4, 6 ; 4a, 6a) du moyen de retardement (3 ; 3a) dans la position de retardement est plus petite que dans la position de déploiement, dans lequel le moyen de retardement (3 ; 3a) comprend un moyen de guidage (18) conçu pour dévier la sangle de retardement (15), dans lequel le moyen de guidage (18) pour guider la sangle de retardement (15) est relié à la sangle principale de liaison (14),
**caractérisé en ce que**
les extrémités (16) de la sangle de retardement (15) sont directement reliées à la sangle principale de liaison (14) à une même extrémité (6 ; 6a) de la sangle principale de liaison (14).

2. Le dispositif selon la revendication 1, **caractérisé en ce que** la sangle de retardement (15) est guidée par friction par le moyen (18) de guidage de la sangle de retardement (15).

3. Le dispositif selon la revendication 1 ou 2, **caractérisé en ce que** la sangle de retardement (15) s'étend de manière circulaire à la fois dans la position de retardement et dans la position de déploiement.

4. Le dispositif selon l'une des revendications 1 à 3, **caractérisé en ce que** les extrémités (16) de la sangle de retardement (15) et de la sangle principale de liaison (14) sont reliées l'une à l'autre pour former une pile (21).

5. Le dispositif selon l'une des revendications 1 à 4, **caractérisé en ce que** le dispositif (1 ; 1a) comporte une pile (21, 22) aux extrémités opposées (4, 6 ; 4a, 6a), cette pile étant formée d'extrémités de la sangle (16, 23, 24, 25) superposées et reliées entre elles, les extrémités (16) de la sangle de retardement (15) et une extrémité (6a) de la sangle principale de liaison (14) étant reliées entre elles pour former une première pile (21), et une deuxième pile (22) étant formée d'une extrémité (23) de la sangle principale de liaison (14) avec les extrémités (24) d'un tronçon de sangle formant une boucle (15) et les extrémités (25) d'une sangle de maintien (26).

6. Le dispositif selon l'une des revendications 1 à 5, **caractérisé en ce que** le moyen de retardement (3 ; 3a) comprend un élément de retenue (7 ; 7a) qui est, lorsque le dispositif (1) est utilisé comme prévu, disposé à une extrémité (6 ; 6a) de la sangle principale de liaison (14) orientée vers le parachute (2), l'élément de retenue (7 ; 7a) pouvant être relié à un contre-élément de retenue (8) et à une ligne de pontage de parachute (5), une liaison avec le contre-élément de retenue (8) étant fournie sous forme de liaison amovible.

7. Procédé pour retarder l'ouverture d'un parachute (2), en particulier d'un parachute personnel ou d'un parachute de fret, d'une personne sortant d'un aéronef (12) ou d'un fret largué d'un aéronef (12), dans lequel un parachute de freinage (5) est libéré lorsque la personne sort de l'aéronef (12) ou lorsque le fret est largué, et le parachute de freinage (5) agit sur un moyen de retardement (3 ; 3a) reliant le parachute de freinage (5) à une ligne de pontage de parachute (9) de manière à ce que le moyen de retardement (3 ; 3a) soit déplacé d'une position de retardement, dans laquelle le parachute (2) n'est pas déployé, à une position de déploiement, dans laquelle le parachute (2) est déployé, dans laquelle le moyen de retardement (3 ; 3a) est constitué de sangles et comprend une sangle principale de liaison (14) et une sangle de retardement (15), dans lequel une distance entre les extrémités (4, 6 ; 4a, 6a) d'une sangle principale de liaison (14) du moyen de retardement (3 ; 3a) est augmentée lors d'un mouvement de la position de retardement à la position de déploiement, et le parachute (2) est ouvert dans la position de déploiement, dans lequel la sangle de retardement est déviée par un moyen de guidage (1) du moyen de retardement (3 ; 3a), dans lequel les extrémités (16) de la sangle de retardement (15) sont directement reliées à la sangle principale de liaison (14) à une même extrémité (6 ; 6a) de la sangle principale de liaison (14), et le moyen (18) de guidage de la sangle de retardement (15) est relié à la sangle principale de liaison (14).

8. Système de parachute (13), en particulier système de parachute personnel ou système de parachute de fret comprenant un dispositif (1) pour retarder l'ouverture d'un parachute (2) selon l'une des revendications 1 à 6.

9. Système de parachute selon là revendication 8, **caractérisé en ce qu'**un parachute de freinage (5) pouvant être relié à un aéronef (12) par une connexion détachable comprend un manchon d'emballage de parachute de freinage relié au parachute de freinage (5) et pouvant être relié à une ligne statique de parachute de freinage (11) par une connexion détachable, dans laquelle la ligne statique de parachute de freinage (11) est conçue pour relier le parachute de freinage (5) à l'aéronef (12).
